# EUROPÄISCHE PATENTANMELDUNG

(11) **EP 2 894 048 A1**
(43) Veröffentlichungstag der Anmeldung: **15.07.2015**
(21) Anmeldenummer: 14150837.4
(22) Anmeldetag: 10.01.2014
(51) Int. Cl.: B60B 5/02, B29C 45/14, B60B 33/00

(54) **Laufrolle insbesondere für Schiebetüren**

(71) Anmelder: EKU AG, 8370 Sirnach (CH)
(72) Erfinder: Volger, Anick Reto, 9042 Speicher (CH); Gämperle, Walter, 9242 Oberuzwil (CH)
(74) Vertreter: Rutz & Partner

(57) **Zusammenfassung**

Laufrolle (1) insbesondere für Schiebetüren mit einer Nabe (11) und einem Laufring (13), die formschlüssig miteinander verbunden und koaxial zu einer Laufrollenachse (x) ausgerichtet sind. Erfindungsgemäss weist die Nabe (11) wenigstens ein nach aussen gerichtetes erstes Formelement (1111; 1121; 1131) und der Laufring (13) wenigstens ein nach innen gerichtetes zweites Formelement (1312; 1322; 1332) auf. Zwischen der Nabe (11) und dem Laufring (13) ist ein ringförmiger Puffer (12) vorgesehen, welcher wenigstens ein nach innen gerichtetes drittes Formelement (1213; 1223; 1233), das mit dem ersten Formelement (1111; 1121; 1131) der Nabe (11) verbunden ist, und wenigstens ein nach aussen gerichtetes viertes Formelement (1214; 1224; 1234) aufweist, das mit dem zweiten Formelement (1312; 1322; 1332) des Laufrings (13) verbunden ist. Ferner ist der Puffer (12) oder ein Teil davon aus einem weicheren Kunststoff gefertigt, als die Nabe (11) und der Laufring (13), die aus einem härteren Kunststoff gefertigt sind.

## Beschreibung

Die Erfindung betrifft eine Laufrolle oder ein Rad insbesondere zur verschiebbaren Lagerung von Gegenständen, wie Schiebetüren, Mobiliar oder Teilen davon.

Laufrollen werden eingesetzt, wenn Mobiliar, wie Schränke, Tische oder Stühle, oder Teile davon verschiebbar gelagert werden soll. Dabei wird jeweils angestrebt, dass sich die gelagerten Gegenstände leicht und geräuschlos verschieben lassen.

Aus [1], DE19742780A1, ist z.B. eine Lagervorrichtung mit Tragrollen und Führungsrollen bekannt, mittels der eine Schiebetüre verschiebbar gelagert werden kann. Mittels der Tragrollen wird das gegebenfalls sehr hohe Gewicht der Schiebetür aufgefangen, während die Führungsrollen die Schiebetür entlang der Laufrichtung ausgerichtet halten. Die Tragrollen und die Führungsrollen sind daher zur Aufnahme unterschiedlicher Belastungen ausgelegt.

Aus [2], DE20007532U1, ist bekannt, dass bei Radstrukturen, die eine Nabe oder Felge und einen Bodenkontaktabschnitt aufweisen, sich diese beiden Teile insbesondere dann voneinander lösen können, wenn der Bodenkontaktabschnitt relativ dick ausgebildet ist. Sofern der Bodenkontaktabschnitt hingegen relativ dünn ausgebildet ist, so wird oft nicht die geforderte Geräuschreduktion erreicht. Zur Realisierung eines dickeren Bodenkontaktabschnitt wird daher eine Nabe oder Felge verwendet, welche am Aussenumfang radial nach aussen gerichtete Trägerelemente aufweist, die formschlüssig in den Laufring eingreifen und dessen Deformation entgegenwirken. Dabei ergibt sich ein relativ aufwändiger Zusammenbau der Komponenten. Weiterhin können die Funktionen des Bodenkontaktabschnitts, insbesondere die gewünschte Flexibilität zur Erzielung der Laufruhe bei einer vorliegenden Belastung, die gewünschte Abriebfestigkeit der Kontaktflächen und der gewünschte Rollwiderstand nicht optimal einstellen.

Oft wird bei Laufrollen nach längerer Benutzung auch ein Verschleiss festgestellt. Ferner können Deformationen auftreten, welche beim Betrieb wiederum zu einer erhöhten Geräuschentwicklung führen. Sofern der Gegenstand über längere Zeit nicht bewegt wurde, können Standschäden, wie Abplattungen, auftreten, welche die Laufeigenschaften, insbesondere deren Rollwiderstand und die Geräuschentwicklung, erheblich beeinflussen können. Zu beachten ist wiederum, dass bei der Optimierung einer Laufrolle oder eines Rades hinsichtlich der Geräuschentwicklung aufgrund der verwendeten Materialien ein erhöhter Rollwiderstand auftreten kann.

Der vorliegenden Erfindung liegt daher die Aufgabe zugrunde, eine verbesserte Laufrolle zu schaffen.

Insbesondere ist eine Laufrolle mit optimalen Laufeigenschaften zu schaffen, welche gleichzeitig hinsichtlich des Laufwiderstandes, der Laufruhe und der Verschleissfestigkeit optimiert ist.

Ferner soll, insbesondere bei Kurvenfahrten des Gegenstandes, eine gegenseitige Verschiebung der einzelnen Komponenten der Laufrolle, insbesondere ein Ablösen einer der Komponenten vermieden werden.

Diese vorteilhaften Laufeigenschaften der Laufrolle sollen auch bei der Verwendung mit schweren Gegenständen unverändert beibehalten werden.

Diese Aufgabe wird mit einer Laufrolle gelöst, welche die in Anspruch 1 genannten Merkmale aufweist. Vorteilhafte Ausgestaltungen der Erfindung sind in weiteren Ansprüchen angegeben.

Die Laufrolle bzw. das Laufrad ist für die verschiebbare Lagerung insbesondere von Schiebetüren vorgesehen und umfasst eine Nabe und einen Laufring, die formschlüssig miteinander verbunden und koaxial zu einer Laufrollenachse ausgerichtet sind.

Erfindungsgemäss weist die Nabe wenigstens ein nach aussen gerichtetes erstes Formelement und der Laufring wenigstens ein nach innen gerichtetes zweites Formelement auf. Zwischen der Nabe und dem Laufring ist ein ringförmiger Puffer vorgesehen, der wenigstens ein nach innen gerichtetes drittes Formelement, das mit dem ersten Formelement der Nabe gekoppelt ist, und wenigstens ein nach aussen gerichtetes viertes Formelement aufweist, das mit dem zweiten Formelement des Laufrings gekoppelt ist. Ferner sind der Puffer oder Teile davon aus einem weicheren Kunststoff gefertigt ist, als die Nabe und der Laufring, die aus einem härteren Kunststoff gefertigt sind.

Die Laufrolle weist daher drei Elemente, nämlich die Nabe, den Puffer und den Laufring auf, die durch die Materialwahl optimal an die Funktionen angepasst werden können, die von diesen Elementen wahrzunehmen sind.

Die Nabe soll optimal mit einer Welle verbunden werden können und reibungsfrei um diese Welle drehen können. Für die Fertigung der Nabe kann daher ein Kunststoff oder ein Metall mit den gewünschten Eigenschaften gewählt werden. Beispielsweise wird ein sehr harter Kunststoff mit optimalen Gleiteigenschaften, wie Polyoxymethylen (POM), Polyamid oder Polytetrafluorethylen verwendet.

Für die Fertigung des Laufrings kann ein Material mit hoher Abriebfestigkeit und Durabilität verwendet werden, welches auch nach längeren Betriebszeiten optimale Laufeigenschaften aufweist. Beispielsweise wird der Laufring aus Polyoxymethylen (POM) oder Polyamid gefertigt.

Der Puffer ist vorzugsweise aus einem thermoplastischen Elastomer (TPE) gefertigt, der in einem Temperaturbereich von vorzugsweise -15°C bis +40°C eine Flexibilität aufweist, die im Vergleich zum Material der Nabe und des Laufrings sehr hoch und vorzugsweise über den gesamten Temperaturbereich zumindest annähernd konstant ist.

Die Materialien für den Puffer und den Laufring sind vorzugsweise in Abhängigkeit der vorgesehenen Belastung gewählt, so dass die Laufrolle unter Belastung eine maximal zulässige Abplattung nicht überschreitet oder eine Abplattung gänzlich vermieden wird. Anstelle einer Abplattung wird vorzugsweise vorgesehen, dass der Laufring unter Einwirkung einer Last oder einer Unebenheit der Lauffläche sich exzentrisch zur Nabe verschieben kann. Durch minimale exzentrische Auslenkung wird die Last elastisch gehalten, weshalb eine Verschiebung mit minimalem Kraftaufwand geräuschlos erfolgen kann.

Durch die Wahl eines härteren Materials für den Laufring werden Abplattungen und Standschäden, die zu einer störenden Geräuschentwicklung führen könnten, auch bei höheren Krafteinwirkungen vermieden.

Vorzugsweise wird der Puffer aus einem thermoplastischen Elastomer (TPE) gefertigt, der aus einer Mischung von Thermoplasten und Elastomeren besteht. Vorzugsweise weist der thermoplastische Elastomer (TPE) eine harte Komponente aus Polyamid oder Copolyester auf, die mit einer weicheren Komponente aus Polyester-Weichsegmenten, Polyether-Weichsegmenten, oder Polycarbonat-Weichsegmenten kombiniert ist.

Der thermoplastische Elastomer des Puffers verleiht der Laufrolle daher die erforderliche Stabilität und gleichzeitig eine Flexibilität, welche eine Federwirkung erzeugt, mit der Bodenunebenheiten geräuschlos kompensiert werden können. Weiterhin erlaubt der thermoplastische Elastomer des Puffers einen Zusammenbau der Laufrolle mit relativ geringem Kraftaufwand. Aufgrund der Flexibilität des thermoplastischen Elastomers können die Formelemente der Nabe, des Puffers und des Laufrings entweder manuell oder maschinell ineinander verschoben werden.

Nach der Verbindung der Nabe, des Puffers und des Laufrings sind diese spielfrei miteinander verbunden und koaxial zur Laufrollenachse ausgerichtet.

Die Integration des flexiblen Puffers erlaubt ferner, einen relativ dünnen Laufring zu verwenden, der optimale Laufeigenschaften gewährleistet.

Die Nabe, der Puffer und der Laufring sind koaxial zu einer gemeinsamen Laufrollenachse ausgerichtet und entlang dieser Laufrollenachse je in vorzugsweise zwei äussere Segmente und ein dazwischen liegendes inneres Segment aufgeteilt. Mittels der drei Nabensegmente, der drei Puffersegmente und der drei Laufringsegmente, die vorzugsweise je einstückig miteinander verbunden oder durch Verbindungselemente miteinander verbindbar sind, können die Nabe, der Puffer und der Laufring auch unter hoher Belastung, insbesondere auch in Kurvenfahrten, in einer stabilen gegenseitigen Verbindung gehalten werden.

Dazu ist je wenigstens eines der Nabensegmente, der Puffersegmente und der Laufringsegmente je mit wenigstens einem Formelement versehen, das gegebenenfalls vollständig in das betreffende Segmente integriert ist und das beispielsweise einen inneren und/oder einen äusseren Flanschring bildet, der in ein benachbartes Formelement eingreifen kann.

Vorzugsweise ist jedes innere Nabensegment, jedes innere Puffersegment und jedes innere Laufringsegment je mit wenigstens einem Formelement versehen, die derart ineinander eingreifen, dass die Nabe, der Puffer und der Laufring lateral in Richtung der Laufrollenachse unverschiebbar miteinander gekoppelt sind.

Vorzugsweise ist auch jedes äussere Nabensegment, jedes äussere Puffersegment und jedes äussere Laufringsegment mit je wenigstens einem Formelement versehen, die derart ineinander eingreifen, dass die Nabe, der Puffer und der Laufring in Drehrichtung der Laufrollenachse unverschiebbar miteinander gekoppelt sind.

Eine besonders hohe Stabilität der Laufrolle hinsichtlich der gegenseitigen Verschiebung der Nabe, des Puffers und des Laufrings in axialer Richtung wird erreicht, indem die Formelemente des inneren Nabensegments, des inneren Puffersegments und des inneren Laufringsegments derart in der Ausgestaltung eines Flanschrings oder einer dazu korrespondierenden ringförmigen Ausnehmung vorgesehen sind, dass jeweils ein Flanschring und eine ringförmige Ausnehmung radial zueinander benachbart sind und ineinander eingreifen.

In vorzugsweisen Ausgestaltungen sind die Formelemente vorzugsweise beider äusserer Nabensegmente, beider äusserer Puffersegmente und beider äusserer Laufringsegmente in der Ausgestaltung von Verzahnungen vorgesehen, die vorzugsweise spielfrei ineinander eingreifen. Die Nabe, der Puffer und der Laufring werden dadurch drehfest miteinander verbunden. Zur Montage der Laufrolle werden die Verzahnungen entsprechend ausgerichtet, so dass sie ineinander verschoben werden können.

In einer alternativen Ausgestaltung wird einerseits wenigstens je eines der Nabensegmente und der Puffersegmente durch innere Verbindungselemente miteinander verbunden und andererseits wenigstens je eines der Puffersegmente und der Laufringsegmente durch äussere Verbindungselemente miteinander verbunden. Mittels der inneren und äusseren Verbindungselemente kann in einfacher Weise eine stabile Verbindung zwischen dem Puffer und der Nabe einerseits sowie dem Puffer und dem Laufring andererseits erzielt werden.

Vorzugsweise sind die inneren und äusseren Verbindungselemente als Bolzen aus Metall oder Kunststoff ausgestaltet, die in den äusseren Puffersegmenten gehalten und durch Öffnungen im inneren Nabensegment und im inneren Laufringsegment hindurch geführt sind.

Die äusseren Puffersegmente sind vorzugsweise entlang einem inneren Ring mit Bohrungen für die inneren Verbindungselemente und entlang einem äusseren Ring mit Bohrungen für die äusseren Verbindungselemente versehen.

Zwischen dem inneren und äusseren Ring der äusseren Puffersegmente ist vorzugsweise wenigstens ein einteiliges oder zweiteiliges hohlzylindrisches Segment vorgesehen, welches die äusseren Puffersegmente miteinander verbindet und das innere Puffersegment oder einen Teil davon bildet.

Der Puffer kann aus einem oder zwei Teilen gefertigt werden, die beispielsweise über die hohlzylindrischen Segmente aneinander anliegen. Durch die zweiteilige Ausgestaltung des Puffers kann die Laufrolle in einfacher Weise und mit nur geringem Kraftaufwand zusammengesetzt werden.

Nachfolgend wird die Erfindung anhand von Zeichnungen näher erläutert. Dabei zeigt:
- Fig. 1a: eine erfindungsgemässe Laufrolle 1 mit einer Nabe 11 und einem Laufring 13, zwischen denen ein ringförmiger Puffer 12 vorgesehen ist, der im Vergleich zur Nabe 11 und zum Laufring 13 eine erhöhte Flexibilität aufweist;
- Fig. 1b: einen Schnitt durch die Laufrolle 1 von Figur 1a entlang der in Figur 1a eingezeichneten Schnittlinie A--A;
- Fig. 2a: die Laufrolle 1 von Figur 1a in Explosionsdarstellung mit der Nabe 11, dem Puffer 12 und dem Laufring 13 entlang der Laufrollenachse x gegeneinander verschoben;
- Fig. 2b: einen Schnitt durch die Nabe 11, den Puffer 12 und den Laufring 13 von Figur 2a entlang der in Figur 1a eingezeichneten Schnittlinie A--A;
- Fig. 3a: die Nabe 11, den Puffer 12 sowie, geschnitten entlang der in Figur 1a eingezeichneten Schnittlinie B--B, den Laufring 13;
- Fig. 3b: die Nabe 11, den Puffer 12 sowie den Laufring 13 von Figur 1a geschnitten entlang der in Figur 1a eingezeichneten Schnittlinie C--C;
- Fig. 3c: die Nabe 11, den Puffer 12 sowie den Laufring 13 von Figur 1a geschnitten entlang der in Figur 1a eingezeichneten Schnittlinie D--D;
- Fig. 4a: eine weitere erfindungsgemässe Laufrolle 1 mit einer Nabe 11 und einem Laufring 13, zwischen denen ein ringförmiger Puffer 12 vorgesehen ist, der im Vergleich zur Nabe 11 und zum Laufring 13 eine erhöhte Flexibilität aufweist;
- Fig. 4b: einen Schnitt durch die Laufrolle 1 von Figur 4a entlang der in Figur 4a eingezeichneten Schnittlinie E--E;
- Fig. 5a: die Laufrolle 1 von Figur 4a in Explosionsdarstellung mit der Nabe 11, dem Puffer 12 und dem Laufring 13 entlang der Laufrollenachse x gegeneinander verschoben; und
- Fig. 5b: die Nabe 11, den entlang der Schnittlinie F--F geschnittenen Puffer 12 und den entlang der Schnittlinie E--E geschnittenen Laufring 13 von Figur 5a.

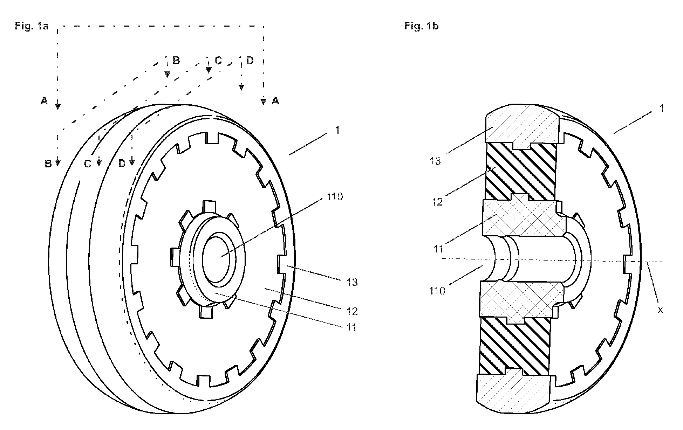

Figur 1a zeigt eine erfindungsgemässe Laufrolle 1 mit einer Nabe 11 und einem Laufring 13, zwischen denen ein ringförmiger Puffer 12 angeordnet ist. Figur 1b zeigt einen Schnitt durch die Laufrolle 1 von Figur 1a entlang der in Figur 1a eingezeichneten Schnittlinie A-A. Die Nabe 11, der Puffer 12 und der Laufring 13 sind konzentrisch und koaxial zu einer Laufrollenachse x ausgebildet, die senkrecht zur Laufrichtung der Laufrolle 1 verläuft.

Durch unterschiedliche Schraffuren ist angezeigt, dass sich die Materialien, die für die Fertigung der Nabe 11, des Puffers 12 und des Laufrings 13 verwendet wurden, voneinander unterscheiden. Diese Materialien können vorteilhaft unter Berücksichtigung der Funktionen gewählt werden, die der Nabe 11, dem Puffer 12 und dem Laufring 13 zugeordnet sind.

Die Nabe 11 weist einen Aufnahmekanal bzw. einen Nabenkanal 110 auf, in den eine Welle bzw. eine sogenannte Radachse eingesetzt wird. Damit die Welle reibungsfrei drehen kann, soll die Nabe 11 aus einem stabilen Material gefertigt werden, welches gute Gleiteigenschaften und eine gute Temperaturstabilität aufweist. Die Nabe 11 wird daher vorzugsweise aus einem entsprechenden Kunststoff, wie Polyoxymethylen (POM), Polytetrafluorethylen oder Polyamid oder gegebenenfalls aus Metall gefertigt.

Der Laufring 13 wird vorzugsweise abriebfest und weitgehend formstabil ausgestaltet, so dass die vorteilhaften Laufeigenschaften der Laufrolle 1 auch nach längerem Betrieb uneingeschränkt erhalten sind. Vorzugsweise wird der Laufring 13 aus einem relativ harten Kunststoff, wie Polyoxymethylen (POM) oder Polyamid gefertigt. Der Laufring 13, seine Material gefertigt werden, welches etwas weicher oder elastischer ist als das Material, das zur Fertigung der Nabe 11 verwendet wird.

Der Puffer 12 verleiht der Laufrolle 1 eine optimale Flexibilität, welche einen geräuscharmen Betrieb der Laufrolle 1 auch dann gewährleistet, wenn Unebenheiten der Laufflächen beispielsweise der Laufflächen einer Laufschiene vorliegen. Besonders vorteilhaft bei der erfindungsgemässen Struktur der Laufrolle 1 ist, dass sich die Eigenschaften der Laufrolle 1 durch Wahl des Materials insbesondere für den Puffer 12 optimal an die vorgesehenen Belastungen anpassen lassen. Beispielsweise können sich Schiebetüren eines Möbelstücks oder Schiebetüren, die als Trennwände in einem Gebäude dienen, hinsichtlich des Gewichts um ein mehrfaches unterscheiden. Durch die Wahl des Materials und/oder auch durch die geometrische Gestaltung des Puffers 12 kann dieser mit einer gewünschten Flexibilität und Stabilität versehen werden. Die Flexibilität des Puffers 12 kann zum Beispiel durch Bohrungen erhöht werden, die parallel zur Laufrollenachse verlaufen. Alternativ oder zusätzlich kann der Puffer 12 mit ringförmigen Ausnehmungen, wie Ringnuten versehen werden, welche konzentrisch zur Laufrollenachse x seitlich darin eingearbeitet werden.

Vorzugsweise wird der Puffer 12 aus einem thermoplastischen Elastomer (TPE) gefertigt, der in einem Temperaturbereich von vorzugsweise -15°C bis +40°C eine vergleichsweise hohe und vorzugsweise konstante Flexibilität aufweist. Durch die Verwendung einer Mischung von Thermoplasten und Elastomeren für das Puffermaterial werden einerseits eine hohe Formstabilität und andererseits die gewünschte Flexibilität erreicht. Durch die Wahl des Mischungsverhältnisses zwischen Thermoplasten und Elastomeren kann die Laufrolle an die vorliegenden Belastungen angepasst werden. Mit steigender Belastung wird der Anteil der Thermoplasten entsprechend erhöht.

Vorzugsweise wird ein thermoplastischer Elastomer (TPE) verwendet, bei dem eine harte Mischkomponente aus Polyamid oder Copolyester mit einer weichen Mischkomponente aus Polyester-Weichsegmenten, Polyether-Weichsegmenten, oder Polycarbonat-Weichsegmenten kombiniert ist. Durch die Wahl des Anteils der Weichsegmente lässt sich die Flexibilität der Laufrolle 1 an die vorgesehene Belastung anpassen.

Die Nabe 11, der Puffer 12 und der Laufring 13 sind spielfrei derart miteinander verbunden, dass sie sich weder lateral noch in Drehrichtung gegeneinander verschieben können. Dazu sind die Nabe 11, der Puffer 12 und der Laufring 13 mit Formelementen versehen, die formschlüssig ineinander eingreifen und ein gegenseitiges Verdrehen oder Verschieben verhindern.

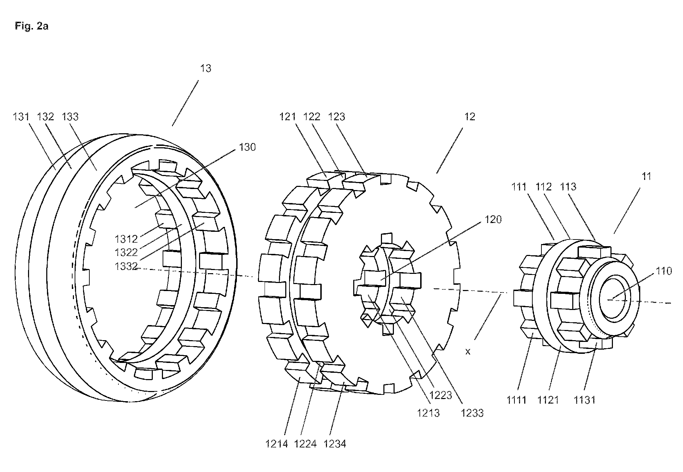

Figur 2a zeigt die Laufrolle 1 von Figur 1a in Explosionsdarstellung mit der Nabe 11, dem Puffer 12 und dem Laufring 13 entlang der Laufrollenachse x gegeneinander verschoben.

In dieser vorzugsweisen Ausgestaltungen weisen die Nabe 11, der Puffer 12 und der Laufring 13 je zwei äussere Segmente 111, 113; 121, 123; 131, 133 auf, die ein inneres Segment 112, 122, 132 einschliessen und die entlang der Laufrollenachse x gegeneinander verschoben und parallel zueinander ausgerichtet sind. Die unterschiedlich ausgestalteten Nabensegmente 111, 112, 113, Puffersegmente 121, 122, 123 und Laufringsegmente 131, 132, 133 bilden vorzugsweise je eine Einheit, erfüllen jedoch unterschiedliche Funktionen. Die Nabe 11, der Puffer 12 und der Laufring 13 können daher als einzelne Einheiten gefertigt werden.

Die Nabe 11 weist einen Nabenkanal 110 auf, in den eine Welle eingesetzt werden kann. Der Puffer 12 weist einen Pufferkanal 120 auf, in den die Nabe 11 eingesetzt wird und der Laufring 13 weist einen Laufringkanal 130 auf, welcher der Aufnahme des Puffers 12 dient.

Damit die Nabe 11, der Laufring 13 und der dazwischen liegende Puffer 12 spielfrei miteinander verbunden werden können, weist der Puffer 12 vorzugsweise ein Volumen auf, welches um 1 % bis 7.5%, vorzugsweise etwa 3% grösser ist als das dazu korrespondierenden Volumen, das zwischen der Nabe 11 und dem Laufring 13 vorgesehen ist. Beim Einbau des Puffers 12 zwischen die Nabe 11 und den Laufring 13 muss der Puffer 12 daher entsprechend komprimiert werden. Nach dem Einbau des Puffers 12 drückt dieser radial nach innen gegen die Nabe 11 und radial nach aussen gegen den Laufring 13, weshalb formschlüssige und kraftschlüssige Verbindungen resultieren.

Das innere Nabensegment 112 weist ein Formelement 112 in der Form eines Flanschrings auf, welches in ein Formelement 122 in Form eines Nutenrings hineinragt, welches innerhalb des Pufferkanals 22 am Innenumfang des inneren Puffersegments 122 vorgesehen ist. Am Aussenumfang des inneren Puffersegments 122 ist ein weiteres Formelement 1224 in Form eines Nutenrings vorgesehen, in das ein Formelement 1322 in Form eines Flanschrings hineinragt, das am inneren Laufringsegment 132 vorgesehen ist und das in den Laufringkanal 130 hineinragt. Durch den nach aussen ragenden Flanschring 1121 an der Nabe 11, der innerhalb des ersten Nutenrings 1223 im Puffer 12 gehalten ist, wird die Nabe 11 daher innerhalb des Pufferkanals 120 gehalten. Der nach innen weisende Flanschring 1322 des Laufrings 13, der in den zugehörigen Nutenring 1224 im Puffers 12 eingreift, hält den Puffer 12 mit der Nabe 11 innerhalb des Laufringkanals 130. Die Nabe 11, der Puffer 12 und der Laufring 13 sind daher axial unverschiebbar miteinander verbunden.

Die beiden äusseren Nabensegmente 111 und 113 sind mit Formelementen 1111, 1131 bzw. Verzahnungen versehen, die nach dem Zusammenbau der Laufrolle 1 in Formelemente 1213, 1233 bzw. Verzahnungen eingreifen, die am Innenumfang der äusseren Puffersegmente 121, 123 vorgesehen sind und die in den Pufferkanal 120 hineinragen. Am Aussenumfang der äusseren Puffersegmente 121, 123 sind Formelemente 1214, 1234 bzw. Verzahnungen vorgesehen, die in Formelemente 1312, 1332 bzw. Verzahnungen eingreifen, die an den äusseren Laufringsegmenten 131, 133 vorgesehen sind und die nach innen in den Laufringkanal 130 hineinragen. Durch die Verzahnungen 1213, 1233 und 1214, 1234 am Puffer 12, die zu den Verzahnungen 1111, 1131 an der Nabe 11 und den Verzahnungen 1312, 1332, Laufring 13 korrespondieren, sind die Nabe 11, der Puffer 12 und der Laufring 13 nach dem Zusammenbau der Laufrolle 1 drehfest miteinander verbunden. Die Nabe 11, der Puffer 12 und der Laufring 13 können sich daher weder seitlich entlang der Laufrollenachse x gegeneinander verschieben, noch um die Laufrollenachse x gegeneinander verdrehen.

Aufgrund der erhöhten Flexibilität oder Elastizität des Puffers 12 gelingt es trotzdem mit relativ geringem Kraftaufwand, die Nabe 11 in den Pufferkanal 120 und den Puffer 12 mit der Nabe 11 in den Laufringkanal 130 hinein zu verschieben.

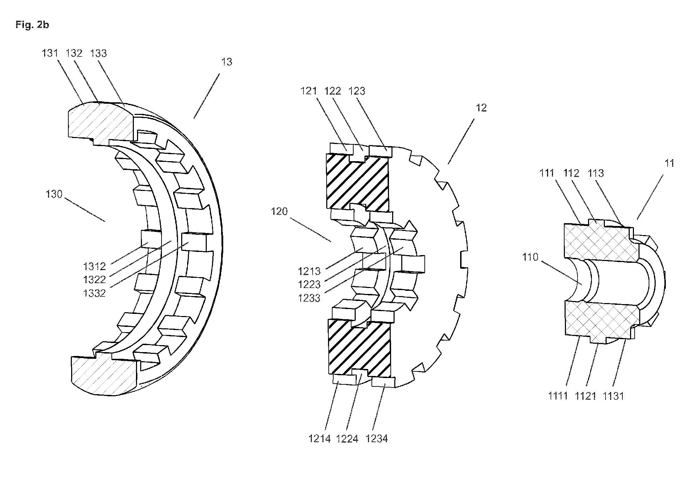

Figur 2b zeigt einen Schnitt durch Nabe 11, den Puffer 12 und den Laufring 13 von Figur 2a entlang der in Figur 1a eingezeichneten Schnittlinie A-A. Durch die Schnittdarstellung ist die Sicht auf die Formelemente 1213, 1223, 1233 innerhalb des Pufferkanals 120 sowie die Formelemente 1322, 1322, 1332 innerhalb des Laufringkanals 130 freigelegt.

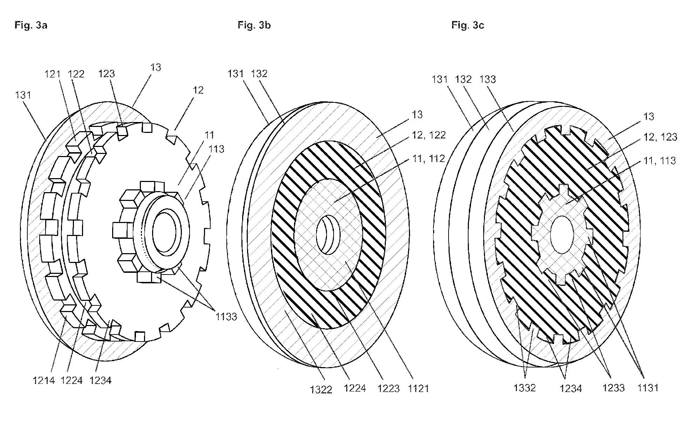

Die Figuren 3a, 3b und 3c zeigen Schnittdarstellungen entlang den in Figur 1a eingezeichneten Schnittlinien B--B, C--C und D--D, und das spielfreie Zusammenwirken der Nabensegmente 111, 112, 113, der Puffersegmente 121, 122, 123 und der Laufringsegmente 131, 132, 133 sowie der damit verbundenen Formelemente 1111, 1121, 1131; 1213, 1223, 1233; 1214, 1224, 1234; 1312, 1322, 1332.

Figur 3a zeigt die Nabe 11, den Puffer 12 sowie, geschnitten entlang der in Figur 1a eingezeichneten Schnittlinie B--B, den Laufring 13.

Figur 3b zeigt die Nabe 11, den Puffer 12 sowie den Laufring 13 von Figur 1a geschnitten entlang der in Figur 1a eingezeichneten Schnittlinie C-C.

Figur 3c zeigt die Nabe 11, den Puffer 12 sowie den Laufring 13 von Figur 1a geschnitten entlang der in Figur 1a eingezeichneten Schnittlinie D-D.

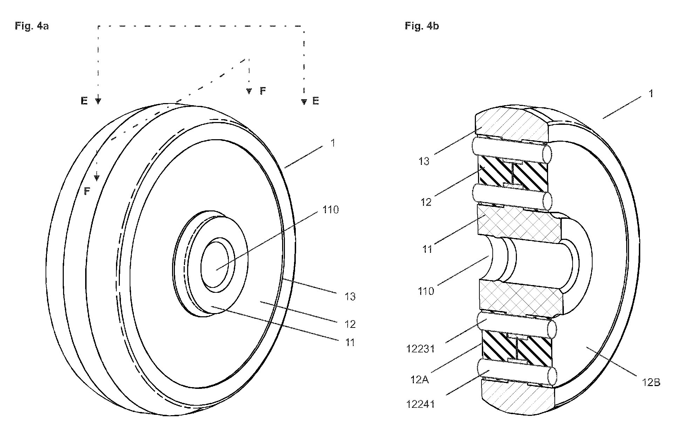

Figur 4a zeigt eine weitere erfindungsgemässe Laufrolle 1 mit einer Nabe 11 und einem Laufring 13, zwischen denen ein ringförmiger Puffer 12 vorgesehen ist, der im Vergleich zur Nabe 11 und zum Laufring 13 eine erhöhte Flexibilität aufweist. Die Nabe 11, der Puffer 12 und der Laufring 13 sind vorzugsweise aus denselben Materialien gefertigt, wie die Nabe 11, der Puffer 12 und der Laufring 13 der Laufrolle 1 von Figur 1a.

Figur 4b zeigt einen Schnitt durch die Laufrolle 1 von Figur 4a entlang der in Figur 4a eingezeichneten Schnittlinie E-E. Dabei ist ersichtlich, dass die Nabe 11 durch bolzenförmige innere Verbindungselemente 12231 mit dem Puffer 12 und der Puffer 12 durch bolzenförmige äussere Verbindungselemente 12241 mit dem Laufring 13 verbunden ist. Der Puffer 12 besteht in dieser Ausgestaltung aus zwei Pufferteilen 12A, 12B, die vorzugsweise identisch ausgestaltet sind. Die inneren und äusseren Verbindungselemente 1223, 1224 sind beispielsweise metallene Bolzen, gegebenenfalls Gewindebolzen, mittels denen die Nabe 11, der Puffer 12 und der Laufring 13 drehfest und gegebenenfalls auch seitlich nicht verschiebbar miteinander verbunden werden.

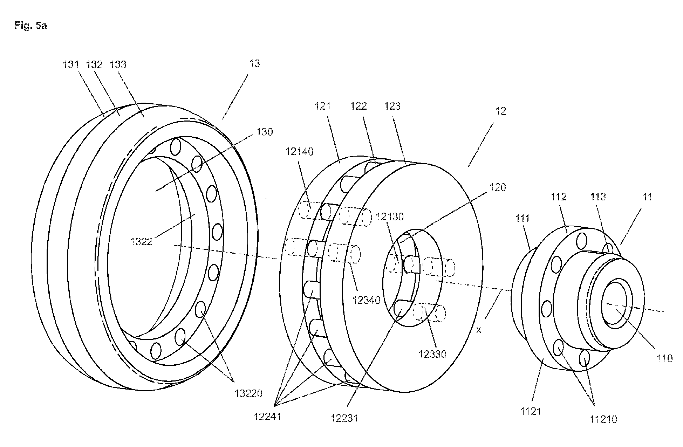

Figur 5a zeigt die Laufrolle 1 von Figur 4a in Explosionsdarstellung mit der Nabe 11, dem Puffer 12 und dem Laufring 13 entlang der Laufrollenachse x gegeneinander verschoben.

Es ist ersichtlich, dass die Nabe 11 drei Nabensegmente 111, 112, 113, der Puffer 12 drei Puffersegmente 121, 122, 123 und der Laufring 13 drei Laufringsegmente 131, 132, 133 aufweisen, die mittels der inneren und äusseren Verbindungselemente 1223, 1224 miteinander verbunden sind.

Das innere Nabensegment 112 weist wiederum ein Formelement 1121 in Form eines nach aussen gerichteten Flanschrings auf, welches mit Bohrungen 11210 zur Aufnahme der inneren Verbindungselemente 12231 versehen ist.

Das innere Laufringsegment 132 weist wiederum ein Formelement 1322 in Form eines nach innen gerichteten Flanschrings auf, welches mit Bohrungen 13220 zur Aufnahme der äusseren Verbindungselemente 12241 versehen ist.

Die inneren Verbindungselemente 12231 sind im Puffer 12 in Bohrungen 12130, 12330 gehalten, welche in den beiden äusseren Puffersegmenten 121, 123 nahe dem Pufferkanal 120 gleichmässig verteilt entlang einem inneren Ring vorgesehen sind.

Die äusseren Verbindungselemente 12241 sind im Puffer 12 in Bohrungen 12140, 12340 gehalten, welche in den beiden äusseren Puffersegmenten 121, 123 gleichmässig verteilt entlang einem äusseren Ring vorgesehen sind.

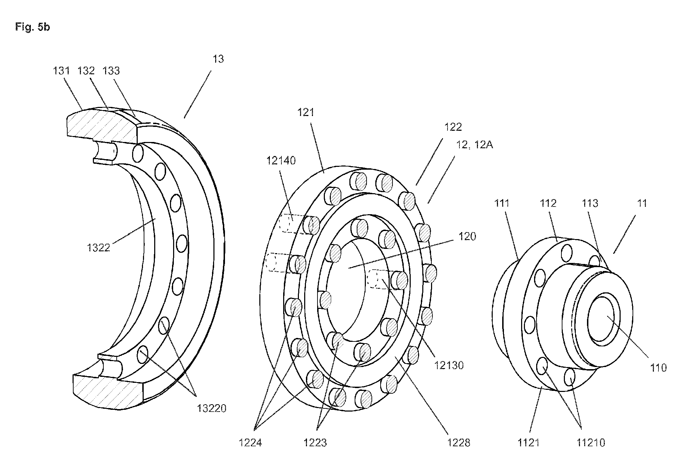

Figur 5b zeigt die Nabe 11, den entlang der in Figur 4a eingezeichneten Schnittlinie F--F geschnittenen Puffer 12 und den entlang der in Figur 4a eingezeichneten Schnittlinie E--E geschnittenen Laufring 13 von Figur 5a. Ferner verläuft der Schnitt durch die ersten und zweiten Verbindungselemente 1223, 1224, die nominell und zeichnerisch dem Puffer 12 zugeordnet sind und die das innere Puffersegment 122 oder einen Teil davon bilden.

Der Puffer 12 besteht vorzugsweise aus zwei Pufferteilen 12A, 12B, die von entgegengesetzten Seiten in die Laufrolle 1 eingesetzt werden. Vorzugsweise weist der Laufring 13 beidseits je einen nach innen gerichteten Aussenflansch auf, mittels denen die Pufferteile 12A, 12B gehalten und axial nach innen gedrückt werden. Zwischen den inneren und äusseren Verbindungselementen 1223, 1224 sind die äusseren Puffersegmente 121, 123 vorzugsweise mit holzzylindrischen Segmenten 1228 versehen, die gegeneinander gerichtet sind und die einander vorzugsweise kontaktieren, wenn die beiden Pufferteile 12A, 12B zusammengefügt sind.

### Literaturverzeichnis

- [1]: DE19742780A1
- [2]: DE20007532U1

### Bezugszeichenliste:

- 1: Laufrolle
- 11: Nabe
- 110: Nabenkanal
- 111: erstes äusseres Nabensegment
- 1111: Formelement am ersten äusseren Nabensegment 111
- 112: inneres Nabensegment
- 1121: Formelement am inneren Nabensegment 112
- 11210: Bohrungen in Formelement 1121
- 113: zweites äusseres Nabensegment
- 1131: Formelement am zweiten äusseren Nabensegment 113
- 12: Puffer
- 120: Pufferkanal 120
- 12A: erste Pufferteil
- 12B: zweiter Pufferteil
- 121: erstes äusseres Puffersegment
- 1213: inneres Formelement am ersten äusseren Puffersegment
- 12130: innere Bohrungen im ersten äusseren Puffersegment 1213
- 1214: äusseres Formelement am ersten äusseren Puffersegment
- 12140: äussere Bohrung im ersten äusseren Puffersegment
- 122: inneres Puffersegment
- 1223: inneres Formelement am inneren Puffersegment 122
- 12231: inneres Verbindungselement
- 1224: äusseres Formelement am inneren Puffersegment 122
- 12241: äusseres Verbindungselement
- 123: zweites äusseres Puffersegment
- 1233: inneres Formelement am zweiten äusseren Puffersegment
- 12330: innere Bohrungen im zweiten äusseren Puffersegment 1233
- 1234: äusseres Formelement am zweiten äusseren Puffersegment
- 12340: äussere Bohrung im zweiten äusseren Puffersegment
- 1228: hohlzylindrisches Segment
- 13: Laufring
- 130: Laufringkanal
- 131: erstes äusseres Laufringsegment
- 1312: Formelement am ersten äusseren Laufringsegment 131
- 132: inneres Laufringsegment
- 1322: Formelement am inneren Laufringsegment 132
- 13220: Bohrungen im Formelement 13222
- 133: zweites äusseres Laufringsegment
- 1332: Formelement am zweiten äusseren Laufringsegment 133
- x: Laufrollenachse

## Patentansprüche

1. Laufrolle (1) insbesondere für Schiebetüren mit einer Nabe (11) und einem Laufring (13), die formschlüssig miteinander verbunden und koaxial zu einer Laufrollenachse (x) ausgerichtet sind, **dadurch gekennzeichnet, dass** die Nabe (11) wenigstens ein nach aussen gerichtetes erstes Formelement (1111; 1121; 1131) und der Laufring (13) wenigstens ein nach innen gerichtetes zweites Formelement (1312; 1322; 1332) aufweist und dass zwischen der Nabe (11) und dem Laufring (13) ein ringförmiger Puffer (12) vorgesehen ist, der wenigstens ein nach innen gerichtetes drittes Formelement (1213; 1223; 1233), das mit dem ersten Formelement (1111; 1121; 1131) der Nabe (11) verbunden ist, und wenigstens ein nach aussen gerichtetes viertes Formelement (1214; 1224; 1234) aufweist, das mit dem zweiten Formelement (1312; 1322; 1332) des Laufrings (13) verbunden ist, und dass der Puffer (12) oder Teile davon aus einem weicheren Kunststoff gefertigt ist, als die Nabe (11) und der Laufring (13), die aus einem härteren Kunststoff gefertigt sind.

2. Laufrolle (1) nach Anspruch 1, **dadurch gekennzeichnet, dass** die Nabe (11) zur Aufnahme einer metallenen Welle vorgesehen ist und dazu eine Nabenöffnung (110) aufweist und dass die Nabe (11) sowie der Laufring (13) aus einem abriebfesten, steifen und reibungsarmen Kunststoff, wie Polyoxymethylen (POM), Polytetrafluorethylen oder Polyamid gefertigt sind.

3. Laufrolle (1) nach Anspruch 1 oder 2, **dadurch gekennzeichnet, dass** der Puffer (12) aus einem thermoplastischen Elastomer (TPE) gefertigt ist, der in einem Temperaturbereich von vorzugsweise -15°C bis +40°C eine vergleichsweise hohe und vorzugsweise konstante Flexibilität aufweist, die vorzugsweise in Abhängigkeit des Bereichs der Belastung der Laufrolle (1) gewählt ist und/oder dass die Flexibilität des Puffers (12) durch dessen geometrische Ausgestaltung bestimmt ist.

4. Laufrolle (1) nach Anspruch 3, **dadurch gekennzeichnet, dass** der thermoplastische Elastomer (TPE) aus einer Mischung von Thermoplasten und Elastomeren besteht.

5. Laufrolle (1) nach Anspruch 4, **dadurch gekennzeichnet, dass** der thermoplastische Elastomer (TPE) eine harte Komponente aus Polyamid oder Copolyester aufweist, die mit einer weichen Komponente aus Polyester-Weichsegmenten, Polyether-Weichsegmenten, oder Polycarbonat-Weichsegmenten kombiniert ist.

6. Laufrolle (1) nach einem der Ansprüche 1 - 5, **dadurch gekennzeichnet, dass** die Nabe (11) wenigstens zwei äussere und ein inneres Nabensegment (111, 112, 113) aufweist, dass der Puffer (12) wenigstens zwei äussere und ein inneres Puffersegment (121, 122, 123) aufweist und dass der Laufring (13) wenigstens zwei äussere und ein inneres Laufringsegment (131, 132, 133) aufweist, wobei die Nabensegmente (111, 112, 113), die Puffersegmente (121, 122, 123) und die Laufringsegmente (131, 132, 133) je entlang der koaxial dazu verlaufenden Laufrollenachse (x) nebeneinander liegen.

7. Laufrolle (1) nach Anspruch 6, **dadurch gekennzeichnet, dass** wenigstens eines der drei Nabensegmente (111, 112, 113) mit wenigstens einem der ersten Formelemente (1111, 1121, 1131), wenigstens eines der drei Puffersegmente (121, 122, 123) mit wenigstens einem der dritten und der vierten Formelemente (1213, 1223, 1233; 1214, 1224, 1234) und je wenigstens eines der drei Laufringsegmente (131, 132, 133) mit wenigstens einem der zweiten Formelemente (1312, 1322, 1332) versehen ist.

8. Laufrolle (1) nach Anspruch 7, **dadurch gekennzeichnet, dass** das innere Nabensegment (122) mit einem der ersten Formelemente (1121), das innere Puffersegment (122) mit wenigstens einem der dritten und wenigstens einem der vierten Formelemente (1223, 1224) und das innere Laufringsegment (132) mit wenigstens einem der zweiten Formelemente (1322) versehen ist, wobei die ersten und dritten Formelemente (1121, 1223) und die zweiten und vierten Formelemente (1322, 1224) je derart ausgebildet sind und ineinander eingreifen, dass die Nabe (11), der Puffer (12) und der Laufring (13) lateral in Richtung der Laufrollenachse (x) unverschiebbar miteinander gekoppelt sind.

9. Laufrolle (1) nach einem der Ansprüche 7 oder 8, **dadurch gekennzeichnet, dass** die äusseren Nabensegmente (111, 113) mit wenigstens einem der ersten Formelemente (1111, 1213), die äusseren Puffersegmente (121, 123) mit wenigstens einem der dritten und wenigstens einem der vierten Formelemente (1223, 1224) und die äusseren Laufringsegmente (131, 133) mit wenigstens einem der zweiten Formelemente (1322) versehen sind, wobei die ersten und dritten Formelemente (1121, 1223) und die zweiten und vierten Formelemente (1322, 1224) derart ineinander eingreifen, dass die Nabe (11), der Puffer (12) und der Laufring (13) in Drehrichtung der Laufrollenachse (x) unverschiebbar miteinander gekoppelt sind.

10. Laufrolle (1) nach Anspruch 8 oder 9, **dadurch gekennzeichnet, dass** das am inneren Nabensegment (122) angeordnete wenigstens eine erste Formelement (1121), die am inneren Puffersegment (122) angeordneten wenigstens einen dritten und vierten Formelemente (1223, 1224) und das am inneren Laufringsegment (132) angeordnete wenigstens eine zweite Formelement (1322) derart in der Ausgestaltung eines Flanschrings oder einer dazu korrespondierenden ringförmigen Ausnehmung vorgesehen sind, dass jeweils ein Flanschring und eine ringförmige Ausnehmung radial zueinander benachbart sind und ineinander eingreifen.

11. Laufrolle (1) nach Anspruch 9 oder 10, **dadurch gekennzeichnet, dass** die an den äusseren Nabensegmenten (111, 113) angeordneten ersten Formelemente (1111, 1131), die an den äusseren Puffersegmenten (121, 123) angeordneten dritten und vierten Formelemente (1213, 1214; 1233, 1234) und die an den äusseren Laufringsegmenten (131, 133) angeordneten zweiten Formelemente (1312, 1332) in der Ausgestaltung von Verzahnungen vorgesehen sind, die ineinander eingreifen.

12. Laufrolle (1) nach einem der Ansprüche 9 oder 10, **dadurch gekennzeichnet, dass** wenigstens je eines der Nabensegmente (112) und wenigstens eines der Puffersegmente (121, 123) durch innere Verbindungselemente (12231) miteinander verbunden sind und dass wenigstens je eines der Puffersegmente (121, 123) und wenigstens eines der Laufringsegmente (132) durch äussere Verbindungselemente (12241) miteinander verbunden sind.

13. Laufrolle (1) nach Anspruch 12, **dadurch gekennzeichnet, dass** die inneren und äusseren Verbindungselemente (12231, 12241) als Bolzen ausgestaltet sind, die in den äusseren Puffersegmenten (121, 123) gehalten und durch Öffnungen (1120; 12330) im inneren Nabensegment (112) und im inneren Laufringsegment (132) hindurch geführt sind.

14. Laufrolle (1) nach Anspruch 12 oder 13, **dadurch gekennzeichnet, dass** die äusseren Puffersegmente (121, 123) entlang einem inneren Ring mit Bohrungen (12130; 12330) für die inneren Verbindungselemente (12231) und entlang einem äusseren Ring mit Bohrungen (12140; 12340) für die äusseren Verbindungselemente (12241) versehen sind und dass zwischen dem inneren und äusseren Ring wenigstens ein einteiliges oder zweiteiliges hohlzylindrisches Segment (1228) vorgesehen ist, welches die äusseren Puffersegmente (121, 123) miteinander verbindet und das innere Puffersegment (122) oder einen Teil davon bildet.

15. Laufrolle (1) nach einem der Ansprüche 7 oder 8, **dadurch gekennzeichnet, dass** die Nabe (11), der Puffer (12) und/oder der Laufring (13) aus einem oder mehreren Teilen bestehen.
